# EUROPEAN PATENT APPLICATION

(11) **EP 4 571 532 A1**
(43) Date of publication of application: **18.06.2025**
(21) Application number: 23862424.1
(22) Date of filing: 06.09.2023
(51) Int. Cl.: G06F 16/483

(54) **CROSS-MODAL RETRIEVAL METHOD AND APPARATUS, DEVICE, STORAGE MEDIUM, AND COMPUTER PROGRAM**

(30) Priority: 07.09.2022 CN 202211091658; 31.08.2023 CN 202311130428
(71) Applicant: Huawei Technologies Co., Ltd., Shenzhen, Guangdong 518129 (CN)
(72) Inventor: DENG, Yangyang, Shenzhen, Guangdong 518129 (CN); HUANG, Zeyi, Shenzhen, Guangdong 518129 (CN); XU, Yun, Shenzhen, Guangdong 518129 (CN); TONG, Chuan, Shenzhen, Guangdong 518129 (CN)
(74) Representative: Eisenführ Speiser
(86) International application number: PCT/CN2023/117203
(87) International publication number: WO 2024/051730

(57) **Abstract**

This application discloses a cross-modal retrieval method and apparatus, a device, a storage medium, and a computer program, and belongs to the field of information retrieval. The method includes: extracting a text label and a text feature of a retrieval text; determining, based on the text label and a visual label of retrieved visual data, whether at least one piece of first visual data whose visual label matches the text label exists in the retrieved visual data, where the retrieved visual data includes an image and/or a video; determining, based on the text feature and a visual feature of the retrieved visual data, whether at least one piece of second visual data whose visual feature matches the text feature exists in the retrieved visual data; and if the at least one piece of first visual data and the at least one piece of second visual data exist in the retrieved visual data, determining a retrieval result based on the at least one piece of first visual data and the at least one piece of second visual data. This application can improve both cross-modal retrieval precision and retrieval breadth.

## Description

This application claims priorities to Chinese Patent Application No. 202211091658.9, filed on September 7, 2022 and entitled "CROSS-MODAL RETRIEVAL METHOD AND APPARATUS, DEVICE, STORAGE MEDIUM, AND COMPUTER PROGRAM", and to Chinese Patent Application No. 202311130428.3, filed on August 31, 2023 and entitled "CROSS-MODAL RETRIEVAL METHOD AND APPARATUS, DEVICE, STORAGE MEDIUM, AND COMPUTER PROGRAM", both of which are incorporated herein by reference in their entireties.

### TECHNICAL FIELD

This application relates to the field of information retrieval, and in particular, to a cross-modal retrieval method and apparatus, a device, a storage medium, and a computer program.

### BACKGROUND

With the development of science and technology, multi-modal data such as images, texts, and videos grows explosively. In addition, users' requirements for retrieval are no longer in a form of text retrieval. Therefore, cross-modal retrieval emerges. Cross-modal retrieval is a retrieval form in which data of one modality is used to retrieve data of another modality. For example, a user retrieves an image or a video by inputting a text. However, due to a large difference between data of different modalities, cross-modal retrieval still faces a great challenge. How to feed back an image or a video that a user wants without limiting content input by the user, to implement cross-modal retrieval of open content and meet actual experience of the user is a very important problem currently. Therefore, a cross-modal retrieval method is urgently needed.

### SUMMARY

This application provides a cross-modal retrieval method and apparatus, a device, a storage medium, and a computer program, to implement cross-modal retrieval of open content in a plurality of scenarios. Technical solutions are as follows.

According to a first aspect, a cross-modal retrieval method is provided. The method includes: extracting a text label and a text feature of a retrieval text; determining, based on the text label and a visual label of retrieved visual data, whether at least one piece of first visual data whose visual label matches the text label exists in the retrieved visual data, where the retrieved visual data includes an image and/or a video; determining, based on the text feature and a visual feature of the retrieved visual data, whether at least one piece of second visual data whose visual feature matches the text feature exists in the retrieved visual data; and determining a retrieval result based on the at least one piece of first visual data and the at least one piece of second visual data.

Optionally, if the at least one piece of first visual data and the at least one piece of second visual data exist in the retrieved visual data, the retrieval result is determined based on the at least one piece of first visual data and the at least one piece of second visual data.

Because a range of the visual label of the retrieved visual data is fixed, the first visual data determined based on the visual label of the retrieved visual data and the text label of the retrieval text is accurate. In other words, a retrieval range can be accurately controlled through label matching. In addition, because the retrieval text is description information of a natural language with semantic openness, the second visual data determined based on the visual feature of the retrieved visual data and the text feature of the retrieval text has no semantic limitation, and supports natural semantic retrieval. Retrieval is flexible, a retrieval range is wide, and fine-grained retrieval text, such as adjectives, can be identified. In this way, when both the first visual data and the second visual data exist in the retrieved visual data, the first visual data and the second visual data are fused, and both cross-modal retrieval precision and retrieval breadth can be improved.

The cross-modal retrieval method provided in this application may be applied to a network-side scenario, or may be applied to a terminal-side scenario. The retrieval text is obtained in different manners based on different application scenarios. For example, in the network-side scenario, a user terminal provides a retrieval page for a user to enter a retrieval text in a retrieval box on the retrieval page, and then the user terminal sends the retrieval text entered in the retrieval box to a server, and the server extracts a text label and a text feature of the retrieval text. In the terminal-side scenario, the user terminal provides a retrieval page for the user to enter a retrieval text in a retrieval box on the retrieval page, and then the user terminal directly extracts a text label and a text feature of the retrieval text entered in the retrieval box.

The text label of the retrieval text is matched with the visual label of the retrieved visual data, to determine whether visual data whose visual label is the same as the text label or belongs to a synonym exists in the retrieved visual data. If the visual data whose visual label is the same as the text label of the retrieval text or belongs to the synonym exists in the retrieved visual data, it is determined that at least one piece of first visual data exists in the retrieved visual data, where the at least one piece of first visual data is visual data, in the retrieved visual data, whose visual label is the same as the text label of the retrieval text or belongs to the synonym. If visual data whose visual label is the same as the text label of the retrieval text or belongs to the synonym does not exist in the retrieved visual data, it is determined that at least one piece of first visual data does not exist in the retrieved visual data.

A similarity between the text feature of the retrieval text and a visual feature of the retrieved visual data is determined. If visual data with a similarity between a visual feature of the visual data and the text feature of the retrieval text being greater than a second similarity threshold exists in the retrieved visual data, it is determined that at least one piece of second visual data exists in the retrieved visual data, where the at least one piece of second visual data is visual data, in the retrieved visual data, with a similarity between a visual feature of the visual data and the text feature of the retrieval text being greater than the second similarity threshold. If visual data with a similarity between a visual feature of the visual data and the text feature of the retrieval text being greater than a second similarity threshold does not exist in the retrieved visual data, it is determined that at least one piece of second visual data does not exist in the retrieved visual data.

It can be learned through determining in the foregoing steps that both the at least one piece of first visual data and the at least one piece of second visual data may exist in the retrieved visual data, or only the at least one piece of first visual data or only at least one piece of second visual data may exist in the retrieved visual data. If both the at least one piece of first visual data and the at least one piece of second visual data exist in the retrieved visual data, the at least one piece of first visual data and the at least one piece of second visual data can be fused according to a fusion policy, to obtain a retrieval result. If the at least one piece of first visual data exists but the at least one piece of second visual data does not exist in the retrieved visual data, the at least one piece of first visual data is used as the retrieval result. If the at least one piece of second visual data exists but the at least one piece of first visual data does not exist in the retrieved visual data, the at least one piece of second visual data is used as the retrieval result.

The fusion policy is preset, and a union set or an intersection set of the at least one piece of first visual data and the at least one piece of second visual data may be selected as the retrieval result based on degrees of focus of the application scenario on a quantity and accuracy of retrieval results. In other words, when the application scenario focuses more on the quantity of retrieval results, the union set of the at least one piece of first visual data and the at least one piece of second visual data is selected as the retrieval result. When the application scenario focuses more on the accuracy of the retrieval result, the intersection set of the at least one piece of first visual data and the at least one piece of second visual data is selected as the retrieval result.

In an example, if the visual label of the at least one piece of first visual data belongs to a first-type label, an intersection set of the at least one piece of first visual data and the at least one piece of second visual data is used as the retrieval result, where the first-type label is a label having uncertainty when representing visual data.

The first-type label is a label having uncertainty when representing visual data. Therefore, when the visual label of the at least one piece of first visual data belongs to the first-type label, it indicates that the visual label of the at least one piece of first visual data may not be able to accurately express content of corresponding visual data. In this case, to ensure accuracy of the retrieval result, the intersection set of the at least one piece of first visual data and the at least one piece of second visual data is used as the retrieval result.

In an example, if the visual label of the at least one piece of first visual data belongs to a second-type label, a union set of the at least one piece of first visual data and the at least one piece of second visual data is used as the retrieval result, where the second-type label is a label having certainty when representing visual data.

The second-type label is a label having certainty when representing visual data. Therefore, when the visual label of the at least one piece of first visual data belongs to the second-type label, it indicates that the visual label of the at least one piece of first visual data can accurately express content of corresponding visual data. In this case, to ensure a quantity of retrieval results, the union set of the at least one piece of first visual data and the at least one piece of second visual data is used as the retrieval result.

When the at least one piece of second visual data exists in the retrieved visual data, the retrieval result may be directly determined based on the foregoing method. Certainly, the retrieval result may be determined based on the foregoing method after the at least one piece of second visual data is processed more accurately. There are a plurality of methods for more accurately processing the at least one piece of second visual data. The following describes one of the methods.

If the at least one piece of second visual data exists in the retrieved visual data, the visual feature of the at least one piece of second visual data and the text feature are input into a neural network model, to obtain a model inference result, where the model inference result includes a similarity result and/or a pairing determining result, the similarity result indicates a similarity between each of the at least one piece of second visual data and the retrieval text, and the pairing determining result indicates whether each of the at least one piece of second visual data and the retrieval text can be paired; and the at least one piece of second visual data is processed based on the model inference result.

The model inference result may include only the similarity result, or may include only the pairing determining result, or may include the similarity result and the pairing determining result. In different cases, manners of processing the at least one piece of second visual data based on the model inference result are different. The following separately describes the manners.

Optionally, the model inference result includes the similarity result. In this case, second visual data whose similarity to the retrieval text is greater than a first similarity threshold is obtained through filtering from the at least one piece of second visual data based on the similarity result.

Because the similarity result is obtained by performing fine-grained analysis after the neural network model combines the visual feature of the second visual data and the text feature of the retrieval text, the similarity result can more accurately represent the similarity between the second visual data and the retrieval text. Visual data that is really less similar to the retrieval text can be filtered out, and visual data that is really similar to the retrieval text can be retained by performing filtering on the at least one piece of second visual data based on the similarity result, thereby improving accuracy of a finally determined retrieval result.

Optionally, the model inference result includes the pairing determining result. In this case, second visual data that can be paired with the retrieval text is obtained through filtering from the at least one piece of second visual data based on the pairing determining result.

Because the pairing determining result is obtained by performing fine-grained analysis after the neural network model combines the visual feature of the second visual data and the text feature of the retrieval text, the pairing determining result can more accurately represent whether the second visual data and the retrieval text can be paired. Visual data that is not paired with the retrieval text can be filtered out, and visual data that is paired with the retrieval text can be retained by performing filtering on the at least one piece of second visual data based on the pairing determining result, thereby filtering out improper visual data and improving accuracy of a finally determined retrieval result.

Optionally, the model inference result includes the similarity result and the pairing determining result. In this case, second visual data that can be paired with the retrieval text is obtained through filtering from the at least one piece of second visual data based on the pairing determining result; and the second visual data obtained through filtering is sorted based on the similarity result in descending order of similarity between the second visual data obtained through filtering and the retrieval text.

When the model inference result includes both the similarity result and the pairing determining result, filtering on the at least one piece of second visual data is first performed based on whether each of the at least one piece of second visual data can be paired with the retrieval text, to retain the second visual data that can be paired with the retrieval text, and delete the second visual data that cannot be paired with the retrieval text. Then, the second visual data obtained through filtering is sorted in descending order of similarity between the second visual data obtained through filtering and the retrieval text, thereby improving sorting rationality of the retrieval result finally fed back to a user.

According to a second aspect, a cross-modal retrieval method is provided, where the method includes:
extracting a text label and a text feature of a retrieval text;
obtaining a label matching result based on the text label and a visual label of retrieved visual data, where the retrieved visual data includes an image and/or a video;
obtaining a feature matching result based on the text feature and a visual feature of the retrieved visual data; and
obtaining a retrieval result based on the label matching result and the feature matching result.

Optionally, the label matching result includes at least one piece of first visual data, the feature matching result includes at least one piece of second visual data, and the obtaining a retrieval result based on the label matching result and the feature matching result includes:
using a union set or an intersection set of the at least one piece of first visual data included in the label matching result and the at least one piece of second visual data included in the feature matching result as the retrieval result.

Optionally, the label matching result includes at least one piece of first visual data, the feature matching result indicates that matched data does not exist, and the obtaining a retrieval result based on the label matching result and the feature matching result includes:
using the at least one piece of first visual data included in the label matching result as the retrieval result.

Optionally, the label matching result indicates that matched data does not exist, the feature matching result includes at least one piece of second visual data, and the obtaining a retrieval result based on the label matching result and the feature matching result includes:
using the at least one piece of second visual data included in the feature matching result as the retrieval result.

Optionally, when the label matching result includes at least one piece of first visual data, and a visual label of a part or all of visual data in the at least one piece of first visual data includes the text label, visual data that is in the at least one piece of first visual data and whose visual label includes the text label is used as the retrieval result.

Optionally, when the label matching result indicates that matched data does not exist, and the feature matching result indicates that matched data does not exist, the retrieval result indicates that the matched data does not exist.

Optionally, the using a union set or an intersection set of the at least one piece of first visual data included in the label matching result and the at least one piece of second visual data included in the feature matching result as the retrieval result includes:
if a visual label of the at least one piece of first visual data belongs to a preset first-type label, using an intersection set of the at least one piece of first visual data and the at least one piece of second visual data as the retrieval result; or
if a visual label of the at least one piece of first visual data belongs to a preset second-type label, using a union set of the at least one piece of first visual data and the at least one piece of second visual data as the retrieval result.

Optionally, the obtaining a feature matching result based on the text feature and a visual feature of the retrieved visual data includes:
performing feature matching on the text feature and the visual feature of the retrieved visual data, to obtain a first feature matching result, where the first feature matching result includes at least one piece of third visual data; and
inputting the text feature and the first feature matching result into a preset model, to obtain the feature matching result, where the feature matching result includes a part or all of third visual data in the first feature matching result, and the third visual data included in the feature matching result is sorted based on a similarity between the third visual data and the text feature.

Optionally, the method further includes:
receiving the retrieval text input by a user.

Optionally, the retrieval result includes at least one image and/or video, and the method further includes:
displaying the retrieval result.

According to a third aspect, a cross-modal retrieval apparatus is provided, where the cross-modal retrieval apparatus has a function of implementing behavior of the cross-modal retrieval method according to the first aspect. The cross-modal retrieval apparatus includes at least one module, and the at least one module is configured to implement the cross-modal retrieval method provided in the first aspect or the second aspect.

According to a fourth aspect, an electronic device is provided, where the electronic device includes a processor and a memory, and the memory is configured to store a computer program for performing the cross-modal retrieval method provided in the first aspect or the second aspect. The processor is configured to execute the computer program stored in the memory, to implement the cross-modal retrieval method according to the first aspect or the second aspect.

Optionally, the electronic device may further include a communication bus, and the communication bus is configured to establish a connection between the processor and the memory.

According to a fifth aspect, a computer-readable storage medium is provided. The storage medium stores instructions. When the instructions are run on a computer, the computer is enabled to perform steps of the cross-modal retrieval method according to the first aspect or the second aspect.

According to a sixth aspect, a computer program product including instructions is provided. When the instructions are run on a computer, the computer is enabled to perform steps of the cross-modal retrieval method according to the first aspect or the second aspect. In other words, a computer program is provided. When the computer program is run on a computer, the computer is enabled to perform steps of the cross-modal retrieval method according to the first aspect or the second aspect.

According to a seventh aspect, a chip is provided, where the chip includes a processor and an interface circuit, the interface circuit is configured to receive instructions and transmit the instructions to the processor, and the processor is configured to perform steps of the cross-modal retrieval method according to the first aspect or the second aspect.

According to an eighth aspect, a retrieval system is provided. The retrieval system includes the cross-modal retrieval apparatus according to the third aspect and a model training apparatus.

Technical effect achieved in the second aspect to the eighth aspect is similar to technical effect achieved by corresponding technical means in the first aspect. Details are not described herein again.

### BRIEF DESCRIPTION OF DRAWINGS

FIG. 1 is a flowchart of a cross-modal retrieval method according to an embodiment of this application;
FIG. 2 is a flowchart of another cross-modal retrieval method according to an embodiment of this application;
FIG. 3 is a flowchart of a visual data fusion method according to an embodiment of this application;
FIG. 4 is a diagram of cross-modal retrieval according to an embodiment of this application;
FIG. 5 is a flowchart of a method for processing second visual data according to an embodiment of this application;
FIG. 6 is a diagram of processing second visual data according to an embodiment of this application;
FIG. 7 is a diagram of a user interface for cross-modal retrieval according to an embodiment of this application;
FIG. 8 is a flowchart of another cross-modal retrieval method according to an embodiment of this application;
FIG. 9 is a diagram of a structure of a cross-modal retrieval apparatus according to an embodiment of this application;
FIG. 10 is a diagram of a structure of an electronic device according to an embodiment of this application;
FIG. 11 is a diagram of a structure of a user terminal according to an embodiment of this application; and
FIG. 12 is a diagram of a structure of another user terminal according to an embodiment of this application.

### DESCRIPTION OF EMBODIMENTS

To make objectives, technical solutions, and advantages of embodiments of this application clearer, the following further describes implementations of this application in detail with reference to the accompanying drawings.

Before a cross-modal retrieval method provided in embodiments of this application is described in detail, an application scenario in embodiments of this application is first described.

There are various forms of data in the information field, and each form may be considered as a modality, for example, a text, a video, an image, and voice. Cross-modal retrieval usually refers to retrieving, from multi-modal data, data of another modality by using data of one modality, for example, retrieving an image or a video by using a text, or retrieving a text or a video by using an image. Cross-modal retrieval is a bridge of interaction between data of different modalities, and focuses on automatically understanding, associating key elements of the data of different modalities, and implementing accurate cross matching. With the development of an NLP (Natural language processing, natural language processing) technology and a CV (Computer Vision, computer vision) technology, an increasing quantity of images and videos are stored on devices such as a network and a mobile phone, retrieval of users is not limited to text retrieval, and users' requirements for cross-modal retrieval are increasing day by day.

The cross-modal retrieval method provided in embodiments of this application may be applied to a network-side scenario like a search engine, or may be applied to a terminal-side scenario. For example, a mobile phone retrieves an image or a video in an album of the mobile phone. Certainly, the method is not limited to the album of the mobile phone, and is also applicable to another similar scenario, for example, a text is entered in history records of chat software to retrieve an image, a video, or the like. According to the cross-modal retrieval method provided in embodiments of this application, a more open and accurate retrieval result can be provided for the user, to meet actual experience of the user. In addition, the method may be applied not only to the network-side retrieval scenario like a search engine, but also to the network-side scenario like content recommendation including news recommendation, commodity purchase recommendation, and the like. A retrieval text is determined by collecting statistics on history records of news or commodities retrieved by the user, and then similar content is recommended.

The cross-modal retrieval method provided in embodiments of this application may be applied to the network-side scenario, or may be applied to the terminal-side scenario. Therefore, embodiments of this application may be performed by a server, or may be performed by a user terminal. For ease of description, execution bodies of embodiments of this application are collectively referred to as an electronic device.

When the electronic device is a server, the electronic device may be an independent server, may be a server cluster or a distributed system including a plurality of physical servers, may be a cloud server that provides basic cloud computing services such as a cloud service, a cloud database, cloud computing, a cloud function, cloud storage, a network service, cloud communication, a middleware service, a domain name service, a security service, a content delivery network CDN (Content Delivery Network, CDN), and a big data and artificial intelligence platform, or may be a cloud computing service center.

When the electronic device is a user terminal, the electronic device may be any electronic product that can perform human-computer interaction with a user in one or more manners such as a keyboard, a touchpad, a touchscreen, a remote control, voice interaction, or a handwriting device. For example, the electronic device may be a personal computer (personal computer, PC), a mobile phone, a smartphone, a personal digital assistant (personal digital assistant, PDA), a wearable device, a pocket personal computer (pocket pc, PPC), a tablet computer, or an intelligent on-board computer.

A person skilled in the art should understand that the foregoing application scenario and electronic device are merely examples. If another existing or possible future application scenario and electronic device are applicable to embodiments of this application, the application scenario and the electronic device should also fall within the protection scope of embodiments of this application, and are included herein by reference.

The following describes the cross-modal retrieval method provided in embodiments of this application.

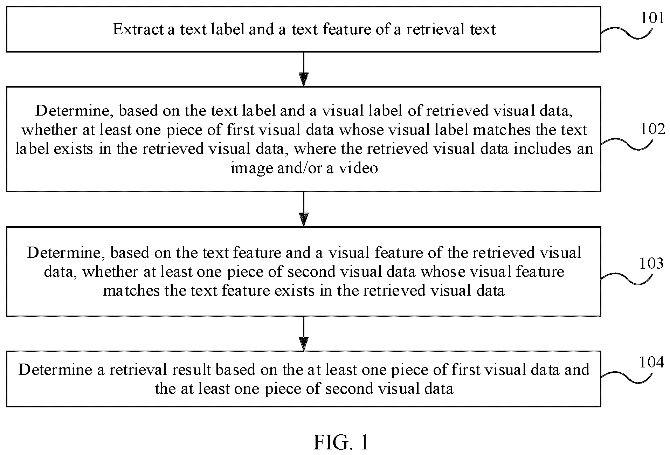

FIG. 1 is a flowchart of a cross-modal retrieval method according to an embodiment of this application. The method is applied to an electronic device, and the method includes the following steps.

**Step 101:** Extract a text label and a text feature of a retrieval text.

The retrieval text is input into a first text model, to obtain the text label and the text feature of the retrieval text. Optionally, the retrieval text may be input into a second text model, to obtain the text feature of the retrieval text, and the retrieval text may be input into a third text model, to obtain the text label of the retrieval text, or the text label of the retrieval text is extracted according to a text label extraction algorithm. In other words, when the first text model is used to extract the text label and the text feature, an input of the first text model is the retrieval text, and an output of the first text model is the text label and the text feature of the retrieval text. When the second text model is used to extract the text feature, an input of the second text model is the retrieval text, and an output of the second text model is the text feature of the retrieval text. When the third text model is used to extract the text label, an input of the third text model is the retrieval text, and an output of the third text model is the text label of the retrieval text.

Structures of the first text model, the second text model, and the third text model may be different, and an implementation process of the text label extraction algorithm may also be different based on different requirements. This is not limited in this embodiment of this application. The text label indicates a classification result of an object retrieved by using the retrieval text. For example, if the retrieval text is "panda eating bamboo", it is determined that panda needs to be retrieved by using the retrieval text. In this way, "panda" can be determined as the text label of the retrieval text. The text feature indicates the feature of the retrieval text.

Based on the foregoing description, the cross-modal retrieval method provided in embodiments of this application may be applied to a network-side scenario, or may be applied to a terminal-side scenario. The retrieval text is obtained in different manners based on different application scenarios. For example, in the network-side scenario, a user terminal provides a retrieval page for a user to enter a retrieval text in a retrieval box on the retrieval page, then the user terminal sends the retrieval text entered in the retrieval box to a server, and the server extracts a text label and a text feature of the retrieval text. In the terminal-side scenario, the user terminal provides a retrieval page for the user to enter a retrieval text in a retrieval box on the retrieval page, and then the user terminal directly extracts a text label and a text feature of the retrieval text entered in the retrieval box.

Step 102: Determine, based on the text label of the retrieval text and a visual label of retrieved visual data, whether at least one piece of first visual data whose visual label matches the text label exists in the retrieved visual data, where the retrieved visual data includes an image and/or a video.

The text label of the retrieval text is matched with the visual label of the retrieved visual data, to determine whether visual data whose visual label is the same as the text label or belongs to a synonym exists in the retrieved visual data. If the visual data whose visual label is the same as the text label of the retrieval text or belongs to the synonym exists in the retrieved visual data, it is determined that the at least one piece of first visual data exists in the retrieved visual data, where the at least one piece of first visual data is visual data, in the retrieved visual data, whose visual label is the same as the text label of the retrieval text or belongs to the synonym. If visual data whose visual label is the same as the text label of the retrieval text or belongs to the synonym does not exist in the retrieved visual data, it is determined that the at least one piece of first visual data does not exist in the retrieved visual data.

Labels belonging to synonyms are annotated in advance. For example, both the label "bloom" and the label "fresh flower" are synonyms of the label "flower." An annotation method is not limited in this embodiment of this application. The visual label indicates a classification result of the visual data. For example, if the visual data is a picture of a fresh flower, the visual label of the visual data may be "fresh flower."

Before step 102 and step 103 are performed, the visual label and a visual feature of the retrieved visual data further need to be extracted. In addition, the visual label and the visual feature of the retrieved visual data may be extracted before step 102 and step 103, or may be extracted before step 101, or certainly may be extracted when the electronic device is idle. An occasion for extracting the visual label and the visual feature of the retrieved visual data is not limited in this embodiment of this application.

The retrieved visual data may be input into a first visual model, to obtain the visual label and the visual feature of the retrieved visual data. Optionally, the retrieved visual data may be input into a second visual model to obtain the visual feature of the retrieved visual data, and the retrieved visual data may be input into a third visual model to obtain the visual label of the retrieved visual data. In other words, when the first visual model is used to extract the visual label and the visual feature of the retrieved visual data, an input of the first visual model is the retrieved visual data, and an output of the first visual model is the visual label and the visual feature of the retrieved visual data. When the second visual model is used to extract the visual feature of the retrieved visual data, an input of the second visual model is the retrieved visual data, and an output of the second visual model is the visual feature of the retrieved visual data. When the third visual model is used to extract the visual label of the retrieved visual data, an input of the third visual model is the retrieved visual data, and an output of the third visual model is the visual label of the retrieved visual data.

Structures of the first visual model, the second visual model, and the third visual model may be different. For example, the third visual model may be an OCR (Optical Character Recognition, optical character recognition) network model, and text information is obtained by performing analysis and recognition processing on the retrieved visual data. Then, a label of the text information is extracted as the visual label of the retrieved visual data.

Based on the foregoing description, the cross-modal retrieval method provided in embodiments of this application may be applied to a network-side scenario, or may be applied to a terminal-side scenario. The retrieved visual data is stored in different locations based on different application scenarios. In the network-side scenario, the retrieved visual data is stored in a server. In the terminal-side scenario, the retrieved visual data is stored in a user terminal. The retrieved visual data may include only an image, or may include only a video, or certainly may include both an image and a video.

**Step 103:** Determine, based on the text feature of the retrieval text and the visual feature of the retrieved visual data, whether at least one piece of second visual data whose visual feature matches the text feature exists in the retrieved visual data.

A similarity between the text feature of the retrieval text and the visual feature of the retrieved visual data is determined. If visual data with a similarity between a visual feature of the visual data and the text feature of the retrieval text being greater than a second similarity threshold exists in the retrieved visual data, it is determined that the at least one piece of second visual data exists in the retrieved visual data, where the at least one piece of second visual data is visual data, in the retrieved visual data, with a similarity between a visual feature of the visual data and the text feature of the retrieval text being greater than the second similarity threshold. If visual data with a similarity between a visual feature of the visual data and the text feature of the retrieval text being greater than a second similarity threshold does not exist in the retrieved visual data, it is determined that the at least one piece of second visual data does not exist in the retrieved visual data.

The similarity between the text feature and the visual feature may be obtained by calculating a cosine distance between the text feature and the visual feature, or may be obtained through calculation in another manner. This is not limited in this embodiment of this application. In addition, the second similarity threshold is preset, for example, 0.8 or 0.85. In actual application, different values may be used based on different requirements. This is not limited in this embodiment of this application. The visual feature indicates a feature of the visual data. For example, the visual data is an image, and the visual feature is a feature of the image.

Based on the foregoing description, a same visual model may be used to extract the visual feature and the visual label of the retrieved visual data, or two different visual models may be used to separately extract the visual feature and the visual label of the retrieved visual data. This is not limited in this embodiment of this application.

**Step 104:** If the at least one piece of first visual data and the at least one piece of second visual data exist in the retrieved visual data, a retrieval result is determined based on the at least one piece of first visual data and the at least one piece of second visual data.

It can be learned through determining in the foregoing steps that both the at least one piece of first visual data and the at least one piece of second visual data may exist in the retrieved visual data, or only the at least one piece of first visual data or only at least one piece of second visual data may exist in the retrieved visual data. If both the at least one piece of first visual data and the at least one piece of second visual data exist in the retrieved visual data, the at least one piece of first visual data and the at least one piece of second visual data can be fused according to a fusion policy, to obtain the retrieval result. If the at least one piece of first visual data exists but the at least one piece of second visual data does not exist in the retrieved visual data, the at least one piece of first visual data is used as the retrieval result. If the at least one piece of second visual data exists but the at least one piece of first visual data does not exist in the retrieved visual data, the at least one piece of second visual data is used as the retrieval result.

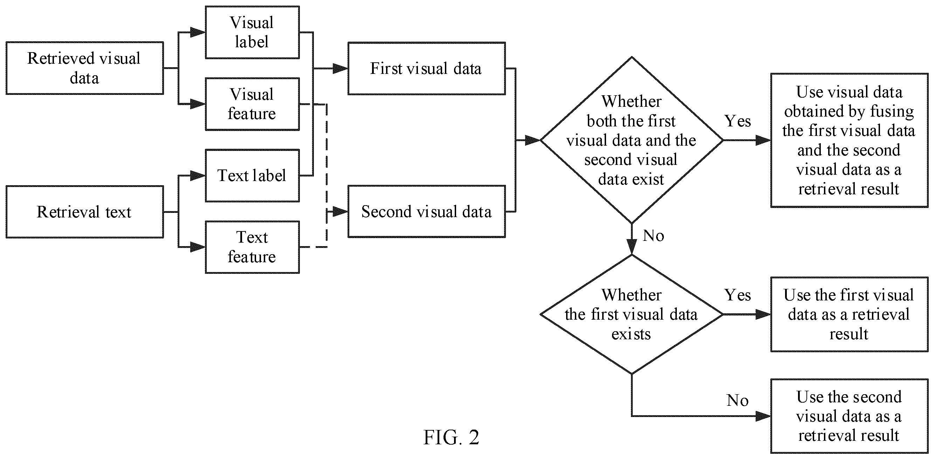

FIG. 2 is a flowchart of another cross-modal retrieval method according to an embodiment of this application. First, a text label and a text feature of a retrieval text input by a user are extracted, and a visual label and a visual feature of retrieved visual data are determined. The text label of the retrieval text is matched with the visual label of the retrieved visual data, to determine whether first visual data whose visual label matches the text label of the retrieval text exists in the retrieved visual data; and the text feature of the retrieval text is matched with the visual feature of the retrieved visual data, to determine whether second visual data whose visual feature matches the text feature of the retrieval text exists in the retrieved visual data. If both the first visual data and the second visual data exist, the first visual data and the second visual data are fused by using a preconfigured fusion solution, and fused visual data is used as a retrieval result. If the first visual data and the second visual data do not exist at the same time, it is determined whether the first visual data exists. If the first visual data exists, the first visual data is used as a retrieval result. If the first visual data does not exist, the second visual data is used as a retrieval result.

The fusion policy is preset, and a union set or an intersection set of the at least one piece of first visual data and the at least one piece of second visual data may be selected as the retrieval result based on degrees of focus of the application scenario on a quantity and accuracy of retrieval results. In other words, when the application scenario focuses more on the quantity of retrieval results, the union set of the at least one piece of first visual data and the at least one piece of second visual data is selected as the retrieval result. When the application scenario focuses more on the accuracy of the retrieval result, the intersection set of the at least one piece of first visual data and the at least one piece of second visual data is selected as the retrieval result.

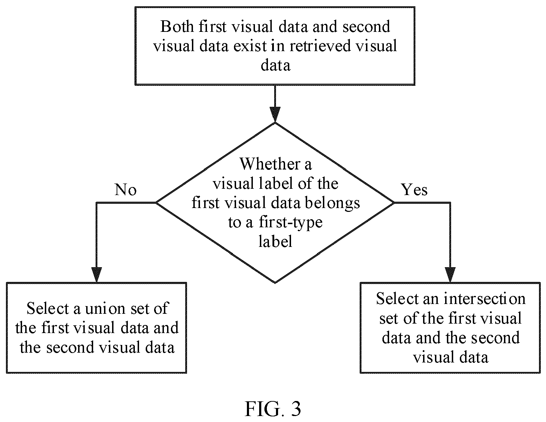

FIG. 3 is a flowchart of a visual data fusion method according to an embodiment of this application. If both at least one piece of first visual data and at least one piece of second visual data exist in retrieved visual data, it is determined whether a visual label of the at least one piece of first visual data belongs to a first-type label or a second-type label. If the visual label of the at least one piece of first visual data belongs to the first-type label, an intersection set of the at least one piece of first visual data and the at least one piece of second visual data is used as a retrieval result, where the first-type label is a label having uncertainty when representing visual data. If the visual label of the at least one piece of first visual data belongs to the second-type label, a union set of the at least one piece of first visual data and the at least one piece of second visual data is used as a retrieval result, where the second-type label is a label having certainty when representing visual data.

The first-type label is a label having uncertainty when representing visual data. Therefore, when the visual label of the at least one piece of first visual data belongs to the first-type label, it indicates that the visual label of the at least one piece of first visual data may not be able to accurately express content of corresponding visual data. In this case, to ensure accuracy of the retrieval result, the intersection set of the at least one piece of first visual data and the at least one piece of second visual data is used as the retrieval result.

The second-type label is a label having certainty when representing visual data. Therefore, when the visual label of the at least one piece of first visual data belongs to the second-type label, it indicates that the visual label of the at least one piece of first visual data can accurately express content of corresponding visual data. In this case, to ensure a quantity of retrieval results, the union set of the at least one piece of first visual data and the at least one piece of second visual data is used as the retrieval result.

The first-type label and the second-type label are set in advance, and different first-type labels and second-type labels may be set based on different product requirements and application scenario requirements. A method for setting the first-type label and the second-type label is not limited in this embodiment of this application.

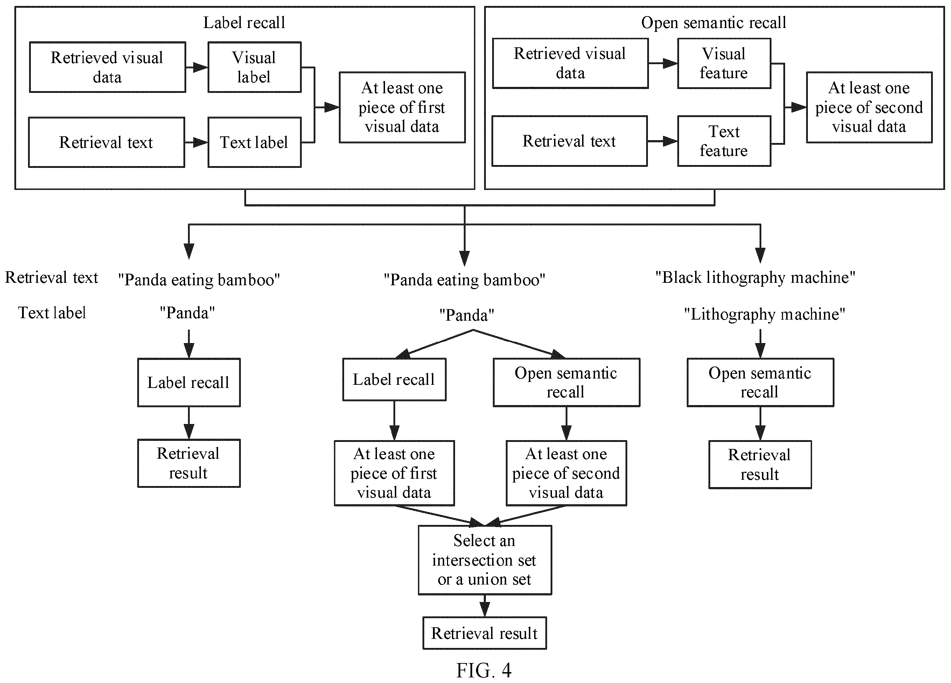

For example, refer to FIG. 4. A process of matching a text label of a retrieval text with a visual label of retrieved visual data is referred to as label recall, and a process of matching a text feature of the retrieval text with a visual feature of the retrieved visual data is referred to as open semantic recall, and may also be referred to as vector recall. There may be three cases after label recall and open semantic recall. To be specific, at least one piece of first visual data is obtained through label recall, but no result is obtained through open semantic recall; or at least one piece of second visual data is obtained through open semantic recall, but no result is obtained through label recall; or at least one piece of first visual data is obtained through label recall, and at least one piece of second visual data is obtained through open semantic recall.

It is assumed that the retrieval text is "panda eating bamboo", and the text label of the retrieval text is "panda". If it is determined, through label recall, that "panda" hits the visual label of the retrieved visual data, but no result is obtained through open semantic recall, visual data whose visual label is "panda" in the retrieved visual data is used as a retrieval result.

It is further assumed that the retrieval text is "panda eating bamboo", and the text label of the retrieval text is "panda". If it is determined, through label recall, that "panda" hits the visual label of the retrieved visual data, visual data whose visual label is "panda" in the retrieved visual data is determined as the at least one piece of first visual data. In addition, the at least one piece of second visual data is obtained through open semantic recall. In this case, an intersection set or a union set of the at least one piece of first visual data and the at least one piece of second visual data may be selected as the retrieval result.

It is further assumed that the retrieval text is "black lithography machine", and the text label of the retrieval text is "lithography machine". If it is determined, through label recall, that "lithography machine" misses the visual label of the retrieved visual data, but the at least one piece of second visual data is obtained through open semantic recall, the at least one piece of second visual data is used as the retrieval result.

Optionally, the retrieved visual data may alternatively include neither the at least one piece of first visual data nor the at least one piece of second visual data. In this case, it is determined that the retrieval result is empty.

When the at least one piece of second visual data exists in the retrieved visual data, the retrieval result may be directly determined based on the foregoing method. Certainly, the retrieval result may be determined based on the foregoing method after the at least one piece of second visual data is processed more accurately. There are a plurality of methods for more accurately processing the at least one piece of second visual data. The following describes one of the methods.

If the at least one piece of second visual data exists in the retrieved visual data, the visual feature of the at least one piece of second visual data and the text feature of the retrieval text are input into a neural network model, to obtain a model inference result, where the model inference result includes a similarity result and/or a pairing determining result, the similarity result indicates a similarity between each of the at least one piece of second visual data and the retrieval text, and the pairing determining result indicates whether each of the at least one piece of second visual data and the retrieval text can be paired; and the at least one piece of second visual data is processed based on the model inference result.

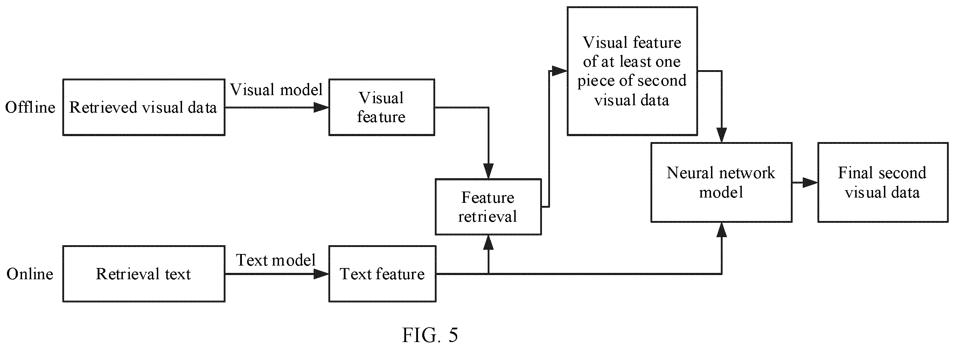

FIG. 5 is a flowchart of a method for processing second visual data according to an embodiment of this application. For ease of understanding, a process of determining at least one piece of second visual data for the first time is described herein. To be specific, in an offline state, visual parsing is performed on retrieved visual data by using a visual model, to obtain a visual feature of the retrieved visual data; text parsing is performed on a retrieval text based on the retrieval text entered online by a user by using a text model, to obtain a text feature of the retrieval text; and feature retrieval is performed based on the text feature of the retrieval text and the visual feature of the retrieved visual data, to determine the at least one piece of second visual data. Then, both the text feature of the retrieval text and a visual feature of the at least one piece of second visual data are input into a neural network model, and the at least one piece of second visual data is further processed through analysis of the neural network model, to obtain final second visual data.

A model inference result may include only a similarity result, or may include only a pairing determining result, or may include a similarity result and a pairing determining result. In different cases, manners of processing the at least one piece of second visual data based on the model inference result are different. The following separately describes the manners.

Case 1: If the model inference result includes the similarity result but does not include the pairing determining result, second visual data whose similarity to the retrieval text is greater than a first similarity threshold is obtained through filtering from the at least one piece of second visual data based on the similarity result.

Because the similarity result is obtained by performing fine-grained analysis after the neural network model combines the visual feature of the second visual data and the text feature of the retrieval text, the similarity result can more accurately represent the similarity between the second visual data and the retrieval text. Visual data that is really less similar to the retrieval text can be filtered out, and visual data that is really similar to the retrieval text can be retained by performing filtering on the at least one piece of second visual data based on the similarity result, thereby improving accuracy of the finally determined retrieval result.

The first similarity threshold is preset, for example, 0.85 or 0.9. In actual application, the first similarity threshold may be set to different values based on different requirements. In addition, values of the first similarity threshold and a second similarity threshold may be the same or different. This is not limited in this embodiment of this application.

Optionally, after the second visual data whose similarity to the retrieval text is greater than the first similarity threshold is obtained through filtering from the at least one piece of second visual data, the second visual data obtained through filtering may be further sorted in descending order of similarity, thereby improving sorting rationality of the retrieval result finally fed back to the user.

Case 2: If the model inference result includes the pairing determining result but does not include the similarity result, second visual data that can be paired with the retrieval text is obtained through filtering from the at least one piece of second visual data based on the pairing determining result.

Because the pairing determining result is obtained by performing fine-grained analysis after the neural network model combines the visual feature of the second visual data and the text feature of the retrieval text, the pairing determining result can more accurately represent whether the second visual data and the retrieval text can be paired. Visual data that is not paired with the retrieval text can be filtered out, and visual data that is paired with the retrieval text can be retained by performing filtering on the at least one piece of second visual data based on the pairing determining result, thereby filtering out improper visual data and improving accuracy of the finally determined retrieval result.

Case 3: If the model inference result includes the similarity result and the pairing determining result, second visual data that can be paired with the retrieval text is obtained through filtering from the at least one piece of second visual data based on the pairing determining result; and the second visual data obtained through filtering is sorted based on the similarity result in descending order of similarity between the second visual data obtained through filtering and the retrieval text.

When the model inference result includes both the similarity result and the pairing determining result, filtering on the at least one piece of second visual data is first performed based on whether each of the at least one piece of second visual data can be paired with the retrieval text, to retain the second visual data that can be paired with the retrieval text, and delete the second visual data that cannot be paired with the retrieval text. Then, the second visual data obtained through filtering is sorted in descending order of similarity between the second visual data obtained through filtering and the retrieval text, thereby improving sorting rationality of the retrieval result finally fed back to the user.

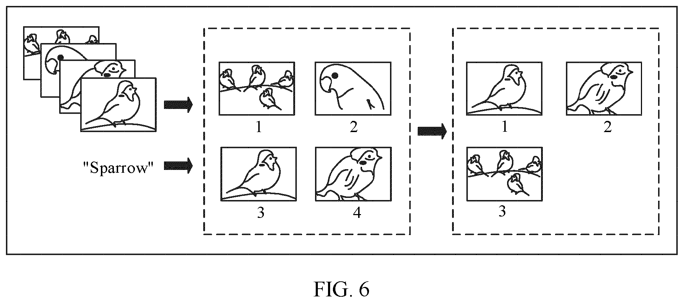

For example, refer to FIG. 6. A retrieval text is "sparrow", and at least one piece of second visual data includes four images: three images of "sparrows" and one image of "parrot" (an image in order 2). Because meaning of "parrot" does not conform to meaning of "sparrow", but both "sparrow" and "parrot" belong to small birds, determining difficulty is high, and it is prone to error when a retrieval result is determined based on only the at least one piece of second visual data obtained for the first time. However, after filtering is performed based on a pairing determining result, the image of "parrot" is deleted from the at least one piece of second visual data obtained for the first time. This helps obtain a more accurate result. In addition, in second visual data obtained through filtering, retrieved visual data whose visual feature is not good enough may be ranked in the front, but retrieved visual data whose visual feature is clearer is ranked in the back. For example, the first image of "sparrow" is ranked in the front because the visual feature of the image is not good enough, and the third image of "sparrow" has a better visual feature and is ranked in the back. Therefore, in descending order of similarity between the second visual data obtained through filtering and the retrieval text, retrieved data whose visual feature is clearer is adjusted to the front, and retrieved visual data whose visual feature is not good enough is adjusted to the back, to obtain a more proper sorting result.

After the retrieval result is obtained by performing the foregoing steps, the retrieval result may be fed back to a user. Based on the foregoing description, the cross-modal retrieval method provided in embodiments of this application may be applied to a network-side scenario, or may be applied to a terminal-side scenario. In the network-side scenario, after determining a retrieval result, a server may send the retrieval result to a user terminal, and the user terminal displays the retrieval result. In the terminal-side scenario, after determining the retrieval result, the user terminal may display the retrieval result.

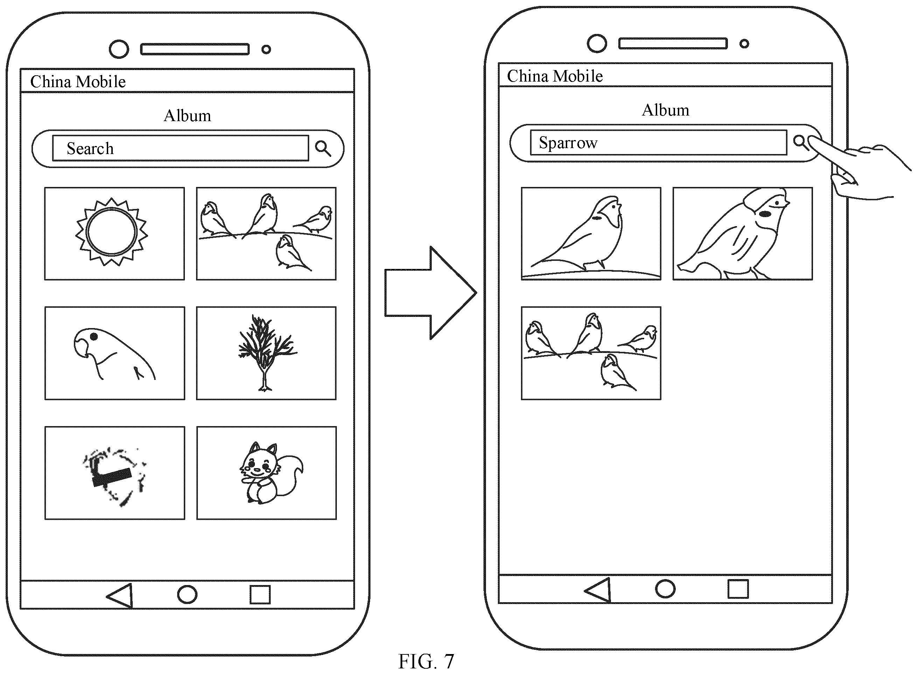

For example, refer to FIG. 7. When the user needs to search for an image or a video in an album of a mobile phone, the user may enter "sparrow" in a search box. In this case, after the mobile phone retrieves the album of the mobile phone by using the method provided in this embodiment of this application, three images of "sparrow" are obtained. In addition, in the three images, an image whose visual feature is clearer is ranked in the front, and an image whose visual feature is not good enough is ranked in the back.

Because a range of the visual label of the retrieved visual data is fixed, the first visual data determined based on the visual label of the retrieved visual data and the text label of the retrieval text is accurate. In other words, a retrieval range can be accurately controlled through label matching. In addition, because the retrieval text is description information of a natural language with semantic openness, the second visual data determined based on the visual feature of the retrieved visual data and the text feature of the retrieval text has no semantic limitation, and supports natural semantic retrieval. Retrieval is flexible, a retrieval range is wide, and fine-grained retrieval text, such as adjectives, can be identified. In this way, when both the first visual data and the second visual data exist in the retrieved visual data, the first visual data and the second visual data are fused, and both cross-modal retrieval precision and retrieval breadth can be improved.

In addition, when the first visual data and the second visual data are fused, different fusion solutions are used by determining whether the visual label of the first visual data belongs to the first-type label or the second-type label. This implements different focuses on a quantity and accuracy of retrieval results in the application scenario. In addition, in this embodiment of this application, both the visual feature of the second visual data and the text feature of the retrieval text may be input into the neural network model. The neural network model combines the visual feature and the text feature to implement fine-grained analysis, to perform filtering on the second visual data, thereby improving accuracy and rationality of the retrieval result.

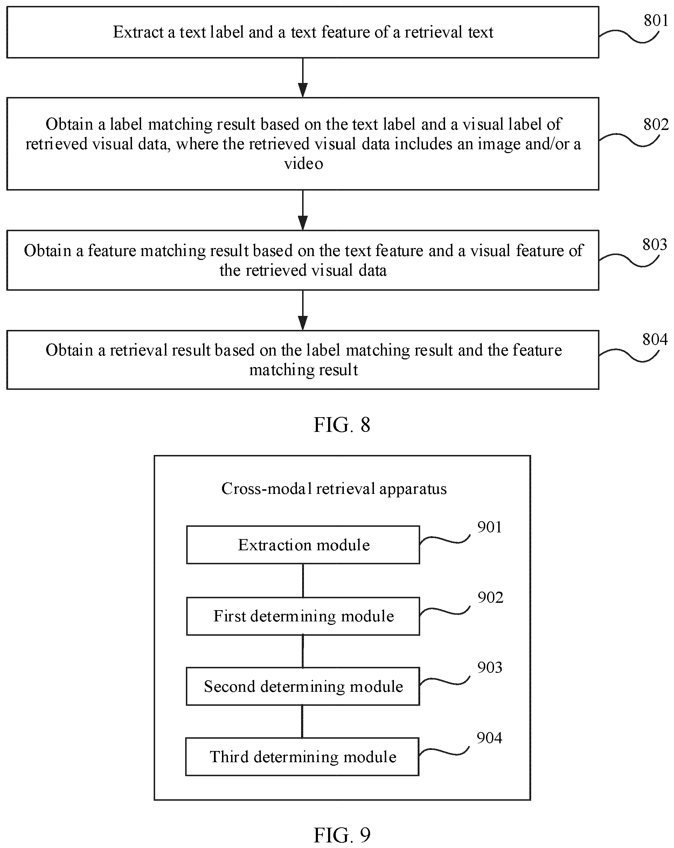

FIG. 8 is a flowchart of another cross-modal retrieval method according to an embodiment of this application. The method includes the following steps.

Step 801: Extract a text label and a text feature of a retrieval text.

Optionally, the method further includes: receiving the retrieval text input by a user.

Step 802: Obtain a label matching result based on the text label of the retrieval text and a visual label of retrieved visual data, where the retrieved visual data includes an image and/or a video.

Step 803: Obtain a feature matching result based on the text feature of the retrieval text and a visual feature of the retrieved visual data.

Optionally, the obtaining a feature matching result based on the text feature and a visual feature of the retrieved visual data includes: performing feature matching on the text feature and the visual feature of the retrieved visual data, to obtain a first feature matching result, where the first feature matching result includes at least one piece of third visual data; and inputting the text feature and the first feature matching result into a preset model, to obtain the feature matching result, where the feature matching result includes a part or all of third visual data in the first feature matching result, and the third visual data included in the feature matching result is sorted based on a similarity between the third visual data and the text feature.

The preset model may be a neural network model.

Step 804: Obtain a retrieval result based on the label matching result and the feature matching result.

The label matching result may include at least one piece of first visual data, or may not include at least one piece of first visual data. The feature matching result may include at least one piece of second visual data, or may not include at least one piece of second visual data. For different cases, manners of determining the retrieval result are different. The following separately describes the manners.

Case 1: The label matching result includes the at least one piece of first visual data, and the feature matching result includes the at least one piece of second visual data. In this case, an implementation process of obtaining a retrieval result based on the label matching result and the feature matching result includes: using a union set or an intersection set of the at least one piece of first visual data included in the label matching result and the at least one piece of second visual data included in the feature matching result as the retrieval result.

Optionally, the using a union set or an intersection set of the at least one piece of first visual data included in the label matching result and the at least one piece of second visual data included in the feature matching result as the retrieval result includes: if a visual label of the at least one piece of first visual data belongs to a preset first-type label, using the intersection set of the at least one piece of first visual data and the at least one piece of second visual data as the retrieval result; or if a visual label of the at least one piece of first visual data belongs to a preset second-type label, using the union set of the at least one piece of first visual data and the at least one piece of second visual data as the retrieval result.

Case 2: The label matching result includes the at least one piece of first visual data, and the feature matching result indicates that matched data does not exist. In this case, an implementation process of obtaining a retrieval result based on the label matching result and the feature matching result includes: using the at least one piece of first visual data included in the label matching result as the retrieval result.

Case 3: The label matching result indicates that matched data does not exist, and the feature matching result includes the at least one piece of second visual data. In this case, an implementation process of obtaining a retrieval result based on the label matching result and the feature matching result includes: using the at least one piece of second visual data included in the feature matching result as the retrieval result.

Case 4: When the label matching result includes the at least one piece of first visual data, and a visual label of a part or all of visual data in the at least one piece of first visual data includes the text label, visual data that is in the at least one piece of first visual data and whose visual label includes the text label is used as the retrieval result.

Case 5: When the label matching result indicates that matched data does not exist, and the feature matching result indicates that matched data does not exist, the retrieval result indicates that matched data does not exist.

Optionally, the retrieval result determined in the foregoing steps includes at least one image and/or video. In this case, the retrieval result may be further displayed.

Because a range of the visual label of the retrieved visual data is fixed, the first visual data determined based on the visual label of the retrieved visual data and the text label of the retrieval text is accurate. In other words, a retrieval range can be accurately controlled through label matching. In addition, because the retrieval text is description information of a natural language with semantic openness, the second visual data determined based on the visual feature of the retrieved visual data and the text feature of the retrieval text has no semantic limitation, and supports natural semantic retrieval. Retrieval is flexible, a retrieval range is wide, and fine-grained retrieval text, such as adjectives, can be identified. In this way, when both the first visual data and the second visual data exist in the retrieved visual data, the first visual data and the second visual data are fused, and both cross-modal retrieval precision and retrieval breadth can be improved.

In addition, when the first visual data and the second visual data are fused, different fusion solutions are used by determining whether the visual label of the first visual data belongs to the first-type label or the second-type label. This implements different focuses on a quantity and accuracy of retrieval results in the application scenario. In addition, in this embodiment of this application, both the visual feature of the second visual data and the text feature of the retrieval text may be input into the neural network model. The neural network model combines the visual feature and the text feature to implement fine-grained analysis, to perform filtering on the second visual data, thereby improving accuracy and rationality of the retrieval result.

It should be noted that implementation details of the embodiment shown in FIG. 8 are similar to the implementation details of the embodiment shown in FIG. 1. For specific content, refer to related description in the embodiment shown in FIG. 1. Details are not described herein again.

FIG. 9 is a diagram of a structure of a cross-modal retrieval apparatus according to an embodiment of this application. The apparatus may be implemented as a part or the entire of an electronic device by using software, hardware, or a combination thereof. Refer to FIG. 9. The apparatus includes: an extraction module 901, a first determining module 902, a second determining module 903, and a third determining module 904.

The extraction module 901 is configured to extract a text label and a text feature of a retrieval text. For a detailed implementation process, refer to corresponding content in the foregoing embodiments. Details are not described herein again.

The first determining module 902 is configured to determine, based on the text label and a visual label of retrieved visual data, whether at least one piece of first visual data whose visual label matches the text label exists in the retrieved visual data, where the retrieved visual data includes an image and/or a video. For a detailed implementation process, refer to corresponding content in the foregoing embodiments. Details are not described herein again.

The second determining module 903 is configured to determine, based on the text feature and a visual feature of the retrieved visual data, whether at least one piece of second visual data whose visual feature matches the text feature exists in the retrieved visual data. For a detailed implementation process, refer to corresponding content in the foregoing embodiments. Details are not described herein again.

The third determining module 904 is configured to: if the at least one piece of first visual data and the at least one piece of second visual data exist in the retrieved visual data, determine a retrieval result based on the at least one piece of first visual data and the at least one piece of second visual data. For a detailed implementation process, refer to corresponding content in the foregoing embodiments. Details are not described herein again.

Optionally, the third determining module 904 is specifically configured to:
if the visual label of the at least one piece of first visual data belongs to a first-type label, use an intersection set of the at least one piece of first visual data and the at least one piece of second visual data as the retrieval result, where the first-type label is a label having uncertainty when representing visual data; or
if the visual label of the at least one piece of first visual data belongs to a second-type label, use a union set of the at least one piece of first visual data and the at least one piece of second visual data as the retrieval result, where the second-type label is a label having certainty when representing visual data.

Optionally, the apparatus further includes:
a fourth determining module, configured to: if the at least one piece of first visual data exists but the at least one piece of second visual data does not exist in the retrieved visual data, use the at least one piece of first visual data as the retrieval result.

Optionally, the apparatus further includes:
a fifth determining module, configured to: if the at least one piece of second visual data exists but the at least one piece of first visual data does not exist in the retrieved visual data, use the at least one piece of second visual data as the retrieval result.

Optionally, the at least one piece of second visual data exists in the retrieved visual data, and the apparatus further includes:
a model inference module, configured to input the visual feature of the at least one piece of second visual data and the text feature into a neural network model, to obtain a model inference result, where the model inference result includes a similarity result and/or a pairing determining result, the similarity result indicates a similarity between each of the at least one piece of second visual data and the retrieval text, and the pairing determining result indicates whether each of the at least one piece of second visual data and the retrieval text can be paired; and
a processing module, configured to process the at least one piece of second visual data based on the model inference result.

Optionally, the model inference result includes the similarity result; and the processing module is specifically configured to:
obtain, through filtering from the at least one piece of second visual data based on the similarity result, second visual data whose similarity to the retrieval text is greater than a first similarity threshold.

Optionally, the model inference result includes the pairing determining result; and the processing module is specifically configured to:
obtain, through filtering from the at least one piece of second visual data based on the pairing determining result, second visual data that can be paired with the retrieval text.

Optionally, the model inference result includes the similarity result and the pairing determining result; and the processing module is specifically configured to:
obtain, through filtering from the at least one piece of second visual data based on the pairing determining result, second visual data that can be paired with the retrieval text; and
sort, based on the similarity result, the second visual data obtained through filtering in descending order of similarity between the second visual data obtained through filtering and the retrieval text.

Because a range of the visual label of the retrieved visual data is fixed, the first visual data determined based on the visual label of the retrieved visual data and the text label of the retrieval text is accurate. In other words, a retrieval range can be accurately controlled through label matching. In addition, because the retrieval text is description information of a natural language with semantic openness, the second visual data determined based on the visual feature of the retrieved visual data and the text feature of the retrieval text has no semantic limitation. Retrieval is flexible, a retrieval range is wide, and fine-grained retrieval text, such as adjectives, can be identified. In this way, when both the first visual data and the second visual data exist in the retrieved visual data, the first visual data and the second visual data are fused, and both cross-modal retrieval precision and retrieval breadth can be improved.

In addition, when the first visual data and the second visual data are fused, different fusion solutions are used by determining whether the visual label of the first visual data belongs to the first-type label or the second-type label. This implements different focuses on a quantity and accuracy of retrieval results in the application scenario. In addition, in this embodiment of this application, both the visual feature of the second visual data and the text feature of the retrieval text may be input into the neural network model. The neural network model combines the visual feature and the text feature to implement fine-grained analysis, to perform filtering on the second visual data, thereby improving accuracy and rationality of the retrieval result.

It should be noted that, when the cross-modal retrieval apparatus provided in the foregoing embodiment performs cross-modal retrieval, division of the foregoing functional modules is merely used as an example for description. In actual application, the foregoing functions can be allocated to different functional modules and implemented based on a requirement, that is, an inner structure of an apparatus is divided into different functional modules to implement all or part of the functions described above. In addition, the cross-modal retrieval apparatus provided in the foregoing embodiment belongs to a same concept as the cross-modal retrieval method embodiments. For a specific implementation process of the cross-modal retrieval apparatus provided in the foregoing embodiment, refer to the method embodiments. Details are not described herein again.

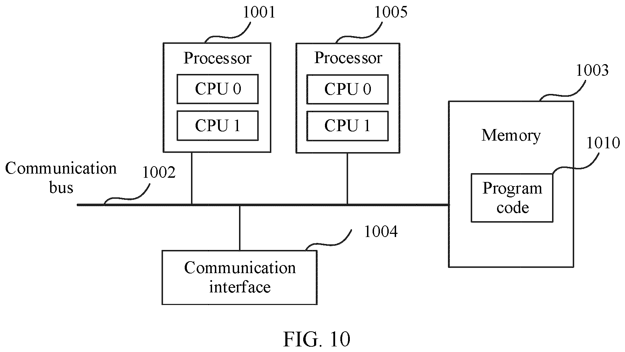

FIG. 10 is a diagram of a structure of an electronic device according to an embodiment of this application. The electronic device includes at least one processor 1001, a communication bus 1002, a memory 1003, and at least one communication interface 1004.

The processor 1001 may be a general-purpose central processing unit (central processing unit, CPU), a network processor (network processor, NP), or a microprocessor, or may be one or more integrated circuits configured to implement the solutions of this application, for example, an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof.

The communication bus 1002 is configured to transmit information between the foregoing components. The communication bus 1002 may be classified into an address bus, a data bus, a control bus, and the like. For ease of representation, only one thick line is used to represent the bus in the figure, but this does not mean that there is only one bus or only one type of bus.

The memory 1003 may be a read-only memory (read-only memory, ROM), a random access memory (random access memory, RAM), an electrically erasable programmable read-only memory (electrically erasable programmable read-only memory, EEPROM), an optical disc (including a compact disc read-only memory (compact disc read-only memory, CD-ROM), a compact disc, a laser disc, a digital versatile disc, a Blu-ray disc, or the like), a magnetic disk storage medium or another magnetic storage device, or any other medium that can be configured to carry or store expected program code in a form of instructions or a data structure and that can be accessed by a computer. However, the memory 1003 is not limited thereto. The memory 1003 may exist independently, and is connected to the processor 1001 through the communication bus 1002. The memory 1003 may alternatively be integrated with the processor 1001.

The communication interface 1004 is configured to communicate with another device or a communication network by using any transceiver-type apparatus. The communication interface 1004 includes a wired communication interface, and may further include a wireless communication interface. The wired communication interface may be, for example, an Ethernet interface. The Ethernet interface may be an optical interface, an electrical interface, or a combination thereof. The wireless communication interface may be a wireless local area network (wireless local area network, WLAN) interface, a cellular network communication interface, a combination thereof, or the like.

During specific implementation, in an embodiment, the processor 1001 may include one or more CPUs, for example, a CPU 0 and a CPU 1 shown in FIG. 10.

During specific implementation, in an embodiment, the electronic device may include a plurality of processors, for example, the processor 1001 and a processor 1005 shown in FIG. 10. Each of the processors may be a single-core processor, or may be a multi-core processor. The processor herein may be one or more devices, circuits, and/or processing cores configured to process data (for example, computer program instructions).

During specific implementation, in an embodiment, the electronic device may further include an output device 1006 and an input device 1009. The output device 1006 communicates with the processor 1001, and may display information in a plurality of manners. For example, the output device 1006 may be a liquid crystal display (liquid crystal display, LCD), a light emitting diode (light emitting diode, LED) display device, a cathode ray tube (cathode ray tube, CRT) display device, or a projector (projector). The input device 1009 communicates with the processor 1001, and may receive a user input in a plurality of manners. For example, the input device 1009 may be a mouse, a keyboard, a touchscreen device, or a sensor device.

In some embodiments, the memory 1003 is configured to store program code 1010 for performing the solutions of this application, and the processor 1001 can execute the program code 1010 stored in the memory 1003. The program code 1010 may include one or more software modules. The electronic device may implement, by using the processor 1001 and the program code 1010 in the memory 1003, the cross-modal retrieval method provided in the foregoing embodiment.

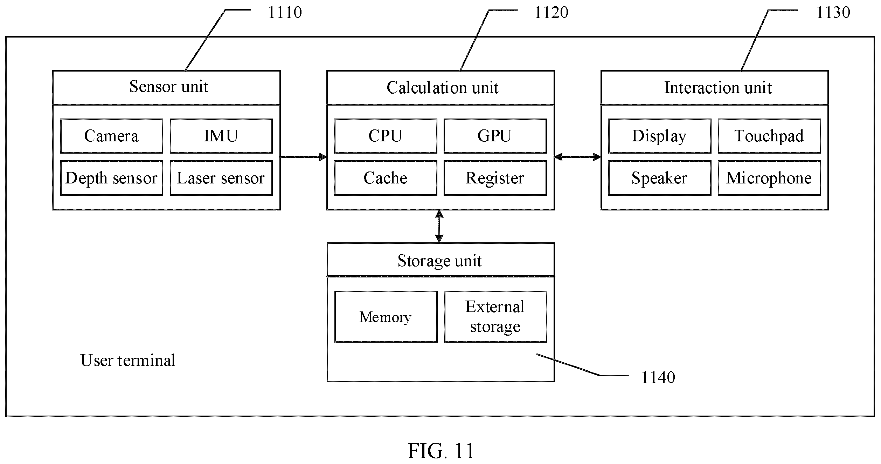

FIG. 11 is a diagram of a structure of a user terminal according to an embodiment of this application. The user terminal includes a sensor unit 1110, a calculation unit 1120, a storage unit 1140, and an interaction unit 1130.

The sensor unit 1110 usually includes a visual sensor (for example, a camera), a depth sensor, an IMU, a laser sensor, and the like.

The calculation unit 1120 usually includes a CPU, a GPU, a cache, a register, and the like, and is mainly configured to run an operating system.

The storage unit 1140 mainly includes a memory and an external storage, and is mainly configured to: read and write local and temporary data of a user, and the like.

The interaction unit 1130 mainly includes a display, a touchpad, a speaker, a microphone, and the like, and is mainly configured to: interact with the user, obtain a user input, implement and present algorithm effect, and the like.

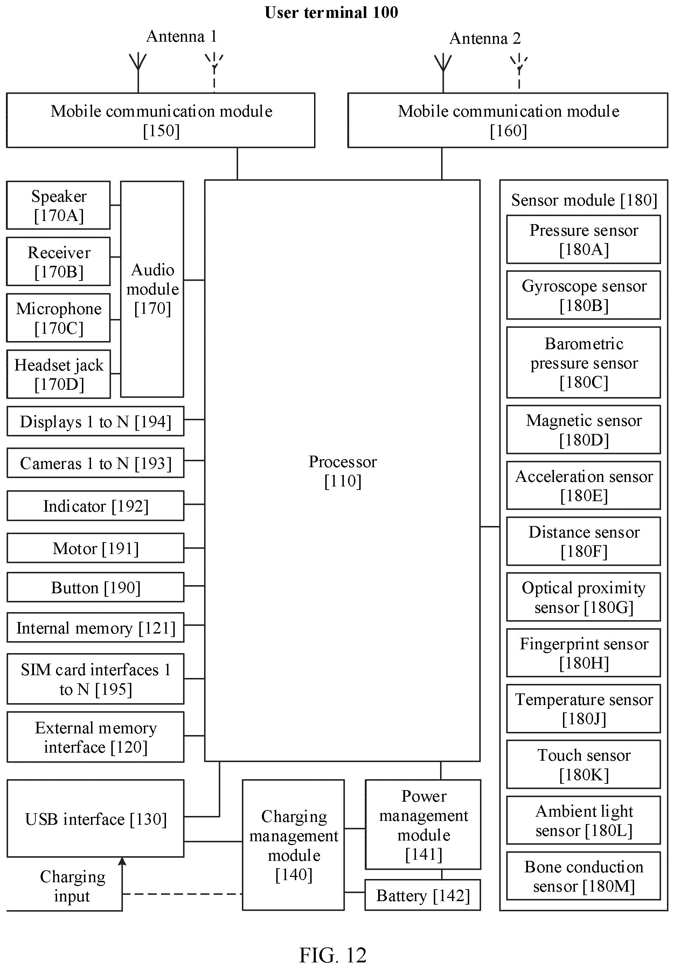

For ease of understanding, the following uses an example to describe a structure of the user terminal 100 provided in this embodiment of this application. FIG. 12 is a diagram of a structure of a user terminal according to an embodiment of this application.

As shown in FIG. 12, the user terminal 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the user terminal 100. In some other embodiments of this application, the user terminal 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors. The processor 110 may execute a computer program, to implement any method in embodiments of this application.

The controller may be a nerve center and a command center of the user terminal 100. The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor 110 may directly invoke the instructions or the data from the memory, to avoid repeated access and reduce waiting time of the processor 110. Therefore, system efficiency is improved.

In some embodiments, the processor 110 may include one or more interfaces. The interface may include an inter-integrated circuit (inter-integrated circuit, I1C) interface, an inter-integrated circuit sound (inter-integrated circuit sound, I1S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules shown in this embodiment of this application is merely an example for description, and constitutes no limitation on the structure of the user terminal 100. In some other embodiments of this application, the user terminal 100 may alternatively use an interface connection manner different from that in the foregoing embodiment, or a combination of a plurality of interface connection manners.

The charging management module 140 is configured to receive a charging input from a charger. The charger may be a wireless charger or a wired charger. In some embodiments of wired charging, the charging management module 140 may receive a charging input of a wired charger through a USB interface 130.

The power management module 141 is configured to connect the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like.

A wireless communication function of the user terminal 100 may be implemented by using the antenna 1, the antenna 2, the mobile communication module 150, the wireless communication module 160, the modem processor, the baseband processor, and the like.

In some feasible implementations, the user terminal 100 may communicate with another device by using the wireless communication function. For example, the user terminal 100 may communicate with a second electronic device, the user terminal 100 establishes a projection connection to the second electronic device, and the user terminal 100 outputs projection data to the second electronic device. The projection data output by the user terminal 100 may be audio/video data.

The antenna 1 and the antenna 2 are configured to transmit and receive an electromagnetic wave signal. Each antenna in the user terminal 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the user terminal 100 and that includes 1G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 2. In some embodiments, at least some functional modules in the mobile communication module 150 may be disposed in the processor 110. In some embodiments, at least some functional modules of the mobile communication module 150 and at least some modules of the processor 110 may be disposed in a same component.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display 194. In some embodiments, the modem processor may be an independent component. In some other embodiments, the modem processor may be independent of the processor 110, and is disposed in a same component as the mobile communication module 150 or another functional module.

The wireless communication module 160 may provide a wireless communication solution that is applied to the user terminal 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 1, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 in the user terminal 100 is coupled to the mobile communication module 150, and the antenna 2 in the user terminal 100 is coupled to the wireless communication module 160, so that the user terminal 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The user terminal 100 implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diodes, QLED), or the like. In some embodiments, the user terminal 100 may include one or N displays 194, where N is a positive integer greater than 1.

In some feasible implementations, the display 194 may be configured to display interfaces output by a system of the user terminal 100.

The user terminal 100 may implement a photographing function by using the ISP, the camera 193, the video codec, the GPU, the display 194, the application processor, and the like.

The ISP may be configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV In some embodiments, the user terminal 100 may include one or N cameras 193, where N is a positive integer greater than 1.

The digital signal processor is configured to process a digital signal, and may process another digital signal in addition to the digital image signal.

The video codec is configured to compress or decompress a digital video. The user terminal 100 may support one or more video codecs. In this way, the user terminal 100 may play or record videos in a plurality of encoding formats, for example, moving picture experts group (moving picture experts group, MPEG)-1, MPEG-1, MPEG-3, and MPEG-4.

The NPU is a neural-network (neural-network, NN) computing processor, quickly processes input information by drawing on a structure of a biological neural network, for example, by drawing on a transfer mode between human brain neurons, and may further continuously perform self-learning. Applications such as intelligent cognition of the user terminal 100 may be implemented by using the NPU, for example, image recognition, facial recognition, voice recognition, and text understanding.

The external memory interface 120 may be configured to connect to an external memory card, for example, a micro-SD card, to extend a storage capability of the user terminal 100. The external memory card communicates with the processor 110 through the external memory interface 120, to implement a data storage function. For example, files such as music and videos are stored in the external memory card.

The internal memory 121 may be configured to store computer-executable program code. The executable program code includes instructions. The processor 110 runs the instructions stored in the internal memory 121, to implement various function applications and data processing of the user terminal 100. The internal memory 121 may include a program storage area and a data storage area. The program storage area may store an operating system, an application required by at least one function (for example, the method in embodiments of this application), and the like. The data storage area may store data (for example, audio data or a phone book) created in a use process of the user terminal 100, and the like. In addition, the internal memory 121 may include a high-speed random access memory, or may include a non-volatile memory, for example, at least one magnetic disk storage device, a flash memory, or a universal flash storage (universal flash storage, UFS).

The user terminal 100 may implement an audio function by using the audio module 170, the speaker 170A, the receiver 170B, the microphone 170C, the headset jack 170D, the application processor, and the like. For example, music playing and recording may be implemented. In some feasible implementations, the audio module 170 may be configured to play a sound corresponding to a video. For example, when the display 194 displays a video play picture, the audio module 170 outputs a video play sound.

The audio module 170 is configured to convert digital audio information into an analog audio signal for output, and is also configured to convert an analog audio input into a digital audio signal.

The speaker 170A, also referred to as a "loudspeaker", is configured to convert an audio electrical signal into a sound signal.

The receiver 170B, also referred to as an "earpiece", is configured to convert an audio electrical signal into a sound signal.

The microphone 170C, also referred to as a "mike" or a "mic", is configured to convert a sound signal into an electrical signal.

The headset jack 170D is configured to connect to a wired headset. The headset jack 170D may be the USB interface 130, or may be a 3.5 mm open mobile terminal platform (open mobile terminal platform, OMTP) standard interface, or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. The gyroscope sensor 180B may be configured to determine a motion posture of the user terminal 100. The barometric pressure sensor 180C is configured to measure barometric pressure.

The acceleration sensor 180E may detect magnitudes of accelerations of the user terminal 100 in various directions (including three axes or six axes). A magnitude and a direction of gravity may be detected when the user terminal 100 is still. The acceleration sensor 180E may be further configured to identify a posture of the user terminal, and is applied to an application such as switching between a landscape mode and a portrait mode or a pedometer.

The distance sensor 180F is configured to measure a distance.

The ambient light sensor 180L is configured to sense ambient light brightness.

The fingerprint sensor 180H is configured to collect a fingerprint.

The temperature sensor 180J is configured to detect a temperature.

The touch sensor 180K is also referred to as a "touch panel". The touch sensor 180K may be disposed on the display 194, and a touchscreen, also referred to as a "touch screen", is formed by the touch sensor 180K and the display 194. The touch sensor 180K is configured to detect a touch operation performed on or near the touch sensor. The touch sensor may transfer the detected touch operation to the application processor to determine a touch event type. A visual output related to the touch operation may be provided through the display 194. In some other embodiments, the touch sensor 180K may alternatively be disposed on a surface of the user terminal 100 at a location different from that of the display 194.

The button 190 includes a power button, a volume button, and the like. The button 190 may be a mechanical button, or may be a touch button. The user terminal 100 may receive a button input, and generate a button signal input related to a user setting and function control of the user terminal 100.

The motor 191 may generate a vibration prompt.

The indicator 192 may be an indicator light, and may be configured to indicate a charging status and a power change, or may be configured to indicate a message, a missed call, a notification, and the like.

The SIM card interface 195 is configured to connect to a SIM card.

An embodiment of this application further provides a computer-readable storage medium, where the storage medium stores instructions, and when the instructions are run on a computer, the computer is enabled to perform the steps of the cross-modal retrieval method in the foregoing embodiments.

An embodiment of this application further provides a computer program product including instructions. When the instructions are run on a computer, the computer is enabled to perform the steps of the cross-modal retrieval method in the foregoing embodiments. In other words, a computer program is provided. When the computer program is run on a computer, the computer is enabled to perform the steps of the cross-modal retrieval method in the foregoing embodiments.

An embodiment of this application further provides a chip, where the chip includes a processor and an interface circuit, the interface circuit is configured to receive instructions and transmit the instructions to the processor, and the processor is configured to perform the steps of the cross-modal retrieval method in the foregoing embodiments.

An embodiment of this application further provides a retrieval system, where the retrieval system includes the cross-modal retrieval apparatus and a model training apparatus in the foregoing embodiments. The model training apparatus is configured to train the model in the foregoing embodiments.

All or a part of the foregoing embodiments may be implemented by software, hardware, firmware, or any combination thereof. When software is used to implement the embodiments, all or a part of the embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, a computer, a server, or a data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid-state disk (solid-state disk, SSD)), or the like. It should be noted that the computer-readable storage medium mentioned in embodiments of this application may be a non-volatile storage medium, that is, may be a non-transitory storage medium.

Embodiments of this application mainly have the following three key points:
1. A dual-channel recall technology based on open semantic recall and label recall is proposed. In image and video retrieval, a "classification and labeling technology" and a "cross-modal comparison learning technology" are respectively used to obtain dual-channel recall results of label recall and open semantic recall.
2. Based on open semantic recall in the key point 1, a multi-feature fine-grained ranking and filtering module is proposed. Open semantic recall is divided into two steps: first recall and fine-grained ranking and filtering. Based on a feature retrieval result obtained from first recall, both a visual feature and a text feature are input into the fine-grained ranking and filtering module. The fine-grained ranking and filtering module performs fine-grained analysis based on the multi-feature input, modifies sorting of first recall, and performs further filtering, thereby improving recall effect.
3. Based on the obtained label recall and open semantic recall results in the key point 1, a dual-channel fusion technology based on open semantics and labels is proposed. Based on dual-channel recall results of label recall and open semantic recall, there are three cases: Dual-channel recall exists, only label recall exists, and only open semantic recall exists. In the dual-channel recall scenario, the system is provided with a configurable fusion solution, to adapt to scenarios with different accuracy and recall rate requirements.

Embodiments of this application are applied to a cross-modal search scenario, for example, a user enters a text to search for an image and a video. Classification and labeling and cross-modal feature extraction are completed by cooperating with a deep learning network, thereby completing cross-modal retrieval, including fields such as computer vision and natural language processing. A system architecture in embodiments of this application is shown in FIG. 2, and mainly includes: 1. a dual-channel recall component (that is, matching between a text label and a visual label, and matching between a text feature and a visual feature), 2. a dual-channel fusion component (that is, a retrieval result is determined based on whether both at least one piece of first visual data and at least one piece of second visual data exist), and 3. a fine-grained ranking and filtering component (performing fine-grained processing on the at least one piece of second visual data) based on the dual-channel recall component.

According to the method provided in embodiments of this application, more open and accurate cross-modal content search can be provided for the user. Compared with the existing solution, this solution provides a more open search capability in a terminal-side scenario (like an album of a mobile phone) and more accurate search effect in a cloud-side scenario (like a search engine). In embodiments of this application, two technologies are integrated by designing the system: classification and labeling, and cross-modal comparison learning. The classification solution has high precision, which helps ensure recall effect in key scenarios. The cross-modal solution has an extensive recognition capability and has a detailed description capability to recognize adjectives, combined words, and the like. The two solutions are combined to complement each other, to comprehensively improve retrieval precision and breadth. The fine-grained ranking and filtering module uses a plurality of cross-modal features as an input to further improve the result.

A core implementation apparatus in embodiments of this application is computer code, which is implemented as shown in FIG. 2, and is divided into the dual-channel recall component, the dual-channel fusion component, and the fine-grained ranking and filtering component in the dual-channel recall component. The dual-channel recall component and the fine-grained ranking and filtering component need to be implemented by using a deep learning network.

Refer to FIG. 2 and FIG. 5. A core method procedure in embodiments of this application is as follows.

Step 1: A user stores a to-be-retrieved image and a to-be-retrieved video in advance for analysis by a visual model.

Step 2: A developer configures a fusion policy in the dual-channel fusion component in advance.

Step 3: The visual model analyzes user data one by one to obtain a visual feature database and a visual label database, where the visual feature database is used in open semantic recall in a subsequent step, and the visual label database is used in label recall in a subsequent step.

Step 4: The user inputs text description (query) to trigger cross-modal retrieval.

Step 5: A retrieval system extracts label content based on the query in step 4, uses the label to retrieve the visual label database generated in step 3, and obtains a label recall result.

Step 6: The retrieval system inputs the query in step 4 into a text model to generate a text feature, and retrieves, based on the text feature, the visual feature database generated in step 3, to obtain a first recall result.

Step 7: Input both a visual feature and the text feature of the first recall result in step 6 into the fine-grained ranking and filtering module, to sort and filter the first recall result in step 6 in a fine-grained manner, to obtain an open semantic recall result.

Step 8: Input both the label recall result in step 5 and the open semantic recall result in step 7 into the dual-channel fusion component. There are three cases based on whether dual-channel recall exists.
(A) Dual-channel recall exists: Dual-channel recall results are fused and a fusion result is returned based on the configurable fusion policy.
(B) Only label recall exists: The label recall result is returned.
(C) Only semantic recall exists: The semantic recall result is returned.

Refer to FIG. 2 and FIG. 4. For cross-modal retrieval, different fusion effect is triggered in different user input scenarios. A specific procedure is as follows:
Step 1: The user inputs search content (query).
Step 2: The system obtains a label recall result and an open semantic recall result based on the user input.
Step 3: Based on the recall cases in step 2, the system performs a subsequent step in the following three fusion cases:
   Step 3.1 (directly hitting a label): When the user input is the same as a preset label, the label recall result is directly returned, where label recall means that a search result is directly returned based on the label input by the user, for example, a returned image and video. It is assumed that the preset label includes "panda", and the user input is "panda". In this case, if the user input directly hits the label, the label (panda) recall result is returned, and no semantic recall result is returned. A method for setting the preset label is not limited herein. For example, the preset label may be manually set based on a product requirement and an application scenario requirement.

In another implementable solution, when the user input is the same as the preset label, the label recall result is directly returned, and no semantic recall result is returned.

Step 3.2 (the user input does not include a label): When a retrieval statement input by the user does not include a preset label, an open semantic recall result is directly returned, where open semantic recall means that a search result that meets the user input is returned, for example, a returned picture and video. It is assumed that the user inputs "lithography machine", and "lithography machine" is not in the preset label. In this case, if the user inputs a label that is missed, the open semantic recall result is returned, and no label result is returned.

In another implementable solution, when a retrieval statement input by the user does not include a preset label, the open semantic recall result is directly returned, and no label result is returned.

Step 3.3 (the user input includes a label): When a retrieval statement input by the user includes a preset label or semantics indicated by the preset label (for example, a synonym of the preset label), a label recall result and an open semantic recall result need to be returned. It is assumed that the preset label includes "panda", and the user input is "panda eating bamboo". Through system identification, it is found that "panda" included in the user input exactly hits the preset label, therefore, the label recall result and the open semantic recall result need to be returned. Because the label recall result and the open semantic recall result exist, fusion is needed. A fusion solution may be preset for the system based on the label and sensitivity of the label. The fusion solution can select a union set or an intersection set based on degrees of focus of the scenario on a recall quantity and accuracy. For example, if a non-sensitive label (for example, panda) is hit, it is recommended that a union set of a label hit result and a semantic hit result is selected. If a sensitive label is hit, for example, aggressive or sensitive content, it is recommended that the union set is selected to ensure that no error recall occurs to the maximum extent.

According to the solution provided in embodiments of this application, two technical solutions of classification label and cross-modal comparison learning can complement each other. The classification solution has high precision, which helps ensure recall effect in key scenarios. The cross-modal solution has an extensive recognition capability and has a detailed description capability to recognize adjectives, combined words, and the like. The two solutions are combined to complement each other, to comprehensively improve retrieval precision and breadth.

A difference between a solution that needs to be described by using a context and embodiments of this application lies in that a system solution that integrates a classification label technology and a cross-modal comparison learning technology is designed, to implement high-precision open content search without a context. An application scope is wider, and it can be extended to a terminal-side device usage scenario (like an album of a mobile phone).

A difference between the classification label technology and the cross-modal comparison learning technology and embodiments of this application lies in that the two technologies are combined to complement each other, to comprehensively improve retrieval precision and breadth.

The technical solution of fine-grained ranking and filtering shown in FIG. 5 may be used in a post-processing process of open semantic recall, or may be implemented with reference to the foregoing dual-channel fusion method. This is not limited herein. If the fine-grained ranking and filtering module is used in the open semantic recall procedure, open semantic recall quality can be improved, sorting can be optimized, and difficult and wrong examples can be deleted.

The fine-grained ranking and filtering module in embodiments of this application needs to input both a visual feature and a text feature into the fine-grained ranking and filtering module based on the visual feature of first recall and the text feature of this retrieval, to improve recall effect. For details about the technical solution, refer to FIG. 5. The steps are as follows:
Step 1: Input an image or a video into a visual model to obtain a visual feature database.
Step 2: Input a user input into a text model to obtain a text feature.
Step 3: Retrieve a visual feature based on the text feature, and select a result whose similarity is greater than a threshold as a picture or video of first recall, to obtain the visual feature of first recall, where each feature corresponds to one picture or video.
Step 4: Input both the visual feature and the text feature of first recall into the fine-grained ranking and filtering module, where the fine-grained ranking and filtering module includes a neural network model, and may further include a data processing module; and the neural network model outputs a similarity result of each pair of "visual-text" or a determining result about whether the "visual-text" is in pairs.
Step 5: Obtain a result through fine-grained ranking and filtering, as shown in FIG. 6.

FIG. 6 shows effect of fine-grained ranking and filtering. The fine-grained ranking and filtering has the following two functions:
Function 1: Filter out an improper result to improve recall accuracy. As shown in FIG. 6, an example 2 (a parrot) in first recall does not conform to meaning of the search word "sparrow". However, because both "sparrow" and "parrot" belong to small birds, determining difficulty is high. The image and text before first recall are analyzed using the visual model and the text model respectively. It is difficult to implement fine-grained determining, and errors may occur. (For details, see first recall in FIG. 5.) In the fine-grained ranking and filtering phase, both the visual feature and the text feature are input into the model for fine-grained analysis. Therefore, better determining can be performed, and a more accurate result can be obtained (for details, see fine-grained ranking and filtering in FIG. 5). Therefore, in FIG. 6, parrot is deleted after fine-grained ranking and filtering.
Function 2: Adjust a first recall result to improve recall experience. As shown in FIG. 6, a shape feature of sparrow in order 1 in first recall is not as good as shape features of sparrow in order 3 and sparrow in order 4. In the fine-grained ranking and filtering phase, both the visual feature and the text feature are input into the model for fine-grained analysis. Therefore, better determining can be performed, and a more proper sorting result can be obtained.

Different from the solution in which only first recall is performed by using the cross-modal comparison learning technology, this technical solution first performs first recall of decoupling the visual model from the text model, to ensure inference efficiency and achieve an extensive recognition capability, and have detailed description capability effect to recognize adjectives, combined words, and the like, and a fine-grained ranking and filtering range is narrowed down to a controllable range. Further, the fine-grained ranking and filtering module is added to exclude difficult and wrong examples, adjust a recall sequence, and improve recall quality.

Key technical points of this embodiment of this application are summarized as follows:
1. A dual-channel recall technology based on open semantic recall and label recall is provided. Based on a classification algorithm and a cross-modal feature matching algorithm, and recall results of both label recall and open semantic recall are used as first recall.
2. A retrieval system with a fine-grained ranking and filtering module is protected. In an implementation of the fine-grained ranking and filtering module, based on first recall of the technical point 1, both a text feature and a visual feature are input into the fine-grained ranking and filtering module for fine-grained ranking and filtering based on the first recall result.
3. A dual-channel fusion technology based on open semantics and labels is proposed. Recall is based on labels and semantics, and can be divided into three cases:
   Dual-channel recall: A dual-channel fusion result is obtained according to a configurable fusion policy.
   Label recall only: A label recall result is directly returned.
   Semantic recall only: A semantic recall result is directly returned.

Beneficial effect corresponding to the key technical points in embodiments of this application is as follows:
Dual-channel recall technology based on open semantic recall and label recall: Both open semantics and label recall results are obtained to ensure recall integrity and provide a high-quality starting point for further fine-grained ranking and filtering.

Multi-feature fine-grained ranking and filtering module: Both visual information and text information are input into the model for fine-grained analysis to obtain better sorting results and delete difficult and wrong examples.

Dual-channel fusion technology based on open semantics and labels: Open semantics and label recall results are fused in a configurable manner. By adjusting the fusion manner, public opinion risks are not triggered in sensitive scenarios, and user recall satisfaction is improved in non-sensitive scenarios.

It should be understood that "a plurality of" in this specification means two or more. In descriptions of embodiments of this application, "/" indicates "or" unless otherwise specified. For example, A/B may indicate A or B. In this specification, "and/or" describes only an association relationship between associated objects and indicates that three relationships may exist. For example, A and/or B may indicate the following three cases: Only A exists, both A and B exist, and only B exists. In addition, to clearly describe technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

It should be noted that information (including but not limited to user equipment information, personal information of a user, and the like), data (including but not limited to data used for analysis, stored data, displayed data, and the like), and signals in embodiments of this application are used under authorization by the user or full authorization by all parties, and capturing, use, and processing of related data need to conform to related laws, regulations, and standards of related countries and regions.

The foregoing descriptions are merely embodiments of this application, but are not intended to limit this application. Any modification, equivalent replacement, or improvement made without departing from the spirit and principle of this application should fall within the protection scope of this application.

## Claims

1. A cross-modal retrieval method, wherein the method comprises:
extracting a text label and a text feature of a retrieval text; and determining, based on the text label and a visual label of retrieved visual data, whether at least one piece of first visual data whose visual label matches the text label exists in the retrieved visual data, wherein the retrieved visual data comprises an image and/or a video;
determining, based on the text feature and a visual feature of the retrieved visual data, whether at least one piece of second visual data whose visual feature matches the text feature exists in the retrieved visual data; and
determining a retrieval result based on the at least one piece of first visual data and the at least one piece of second visual data.

2. The method according to claim 1, wherein the determining a retrieval result based on the at least one piece of first visual data and the at least one piece of second visual data comprises:
if the at least one piece of first visual data and the at least one piece of second visual data exist in the retrieved visual data, determining the retrieval result based on the at least one piece of first visual data and the at least one piece of second visual data.

3. The method according to claim 1 or 2, wherein the determining a retrieval result based on the at least one piece of first visual data and the at least one piece of second visual data comprises:
if the visual label of the at least one piece of first visual data belongs to a first-type label, using an intersection set of the at least one piece of first visual data and the at least one piece of second visual data as the retrieval result, wherein the first-type label is a label having uncertainty when representing visual data.

4. The method according to any one of claims 1 to 3, wherein the determining a retrieval result based on the at least one piece of first visual data and the at least one piece of second visual data comprises:
if the visual label of the at least one piece of first visual data belongs to a second-type label, using a union set of the at least one piece of first visual data and the at least one piece of second visual data as the retrieval result, wherein the second-type label is a label having certainty when representing visual data.

5. The method according to any one of claims 1 to 4, wherein the method further comprises:
if the at least one piece of first visual data exists but the at least one piece of second visual data does not exist in the retrieved visual data, using the at least one piece of first visual data as the retrieval result.

6. The method according to any one of claims 1 to 5, wherein the method further comprises:
if the at least one piece of second visual data exists but the at least one piece of first visual data does not exist in the retrieved visual data, using the at least one piece of second visual data as the retrieval result.

7. The method according to any one of claims 1 to 6, wherein the at least one piece of second visual data exists in the retrieved visual data, and the method further comprises:
inputting the visual feature of the at least one piece of second visual data and the text feature into a neural network model, to obtain a model inference result, wherein the model inference result comprises a similarity result and/or a pairing determining result, the similarity result indicates a similarity between each of the at least one piece of second visual data and the retrieval text, and the pairing determining result indicates whether each of the at least one piece of second visual data can be paired with the retrieval text; and
processing the at least one piece of second visual data based on the model inference result.

8. The method according to claim 7, wherein the model inference result comprises the similarity result; and
the processing the at least one piece of second visual data based on the model inference result comprises:
obtaining, through filtering from the at least one piece of second visual data based on the similarity result, second visual data whose similarity to the retrieval text is greater than a first similarity threshold.

9. The method according to claim 7, wherein the model inference result comprises the pairing determining result; and
the processing the at least one piece of second visual data based on the model inference result comprises:
obtaining, through filtering from the at least one piece of second visual data based on the pairing determining result, second visual data that can be paired with the retrieval text.

10. The method according to claim 7, wherein the model inference result comprises the similarity result and the pairing determining result; and
the processing the at least one piece of second visual data based on the model inference result comprises:
obtaining, through filtering from the at least one piece of second visual data based on the pairing determining result, second visual data that can be paired with the retrieval text; and
sorting, based on the similarity result, the second visual data obtained through filtering in descending order of similarity between the second visual data obtained through filtering and the retrieval text.

11. A cross-modal retrieval apparatus, wherein the apparatus comprises:
an extraction module, configured to extract a text label and a text feature of a retrieval text;
a first determining module, configured to determine, based on the text label and a visual label of retrieved visual data, whether at least one piece of first visual data whose visual label matches the text label exists in the retrieved visual data, wherein the retrieved visual data comprises an image and/or a video;
a second determining module, configured to determine, based on the text feature and a visual feature of the retrieved visual data, whether at least one piece of second visual data whose visual feature matches the text feature exists in the retrieved visual data; and
a third determining module, configured to determine a retrieval result based on the at least one piece of first visual data and the at least one piece of second visual data.

12. The apparatus according to claim 11, wherein the third determining module is specifically configured to:
if the at least one piece of first visual data and the at least one piece of second visual data exist in the retrieved visual data, determine the retrieval result based on the at least one piece of first visual data and the at least one piece of second visual data.

13. The apparatus according to claim 11 or 12, wherein the third determining module is specifically configured to:
if the visual label of the at least one piece of first visual data belongs to a first-type label, use an intersection set of the at least one piece of first visual data and the at least one piece of second visual data as the retrieval result, wherein the first-type label is a label having uncertainty when representing visual data.

14. The apparatus according to any one of claims 11 to 13, wherein the third determining module is specifically configured to:
if the visual label of the at least one piece of first visual data belongs to a second-type label, use a union set of the at least one piece of first visual data and the at least one piece of second visual data as the retrieval result, wherein the second-type label is a label having certainty when representing visual data.

15. The apparatus according to any one of claims 11 to 14, wherein the apparatus further comprises:
a fourth determining module, configured to: if the at least one piece of first visual data exists but the at least one piece of second visual data does not exist in the retrieved visual data, use the at least one piece of first visual data as the retrieval result.

16. The apparatus according to any one of claims 11 to 15, wherein the apparatus further comprises:
a fifth determining module, configured to: if the at least one piece of second visual data exists but the at least one piece of first visual data does not exist in the retrieved visual data, use the at least one piece of second visual data as the retrieval result.

17. The apparatus according to any one of claims 11 to 16, wherein the at least one piece of second visual data exists in the retrieved visual data, and the apparatus further comprises:
a model inference module, configured to input the visual feature of the at least one piece of second visual data and the text feature into a neural network model, to obtain a model inference result, wherein the model inference result comprises a similarity result and/or a pairing determining result, the similarity result indicates a similarity between each of the at least one piece of second visual data and the retrieval text, and the pairing determining result indicates whether each of the at least one piece of second visual data and the retrieval text can be paired; and
a processing module, configured to process the at least one piece of second visual data based on the model inference result.

18. The apparatus according to claim 17, wherein the model inference result comprises the similarity result; and the processing module is specifically configured to:
obtain, through filtering from the at least one piece of second visual data based on the similarity result, second visual data whose similarity to the retrieval text is greater than a first similarity threshold.

19. The apparatus according to claim 17, wherein the model inference result comprises the pairing determining result; and the processing module is specifically configured to:
obtain, through filtering from the at least one piece of second visual data based on the pairing determining result, second visual data that can be paired with the retrieval text.

20. The apparatus according to claim 17, wherein the model inference result comprises the similarity result and the pairing determining result; and the processing module is specifically configured to:
obtain, through filtering from the at least one piece of second visual data based on the pairing determining result, second visual data that can be paired with the retrieval text; and
sort, based on the similarity result, the second visual data obtained through filtering in descending order of similarity between the second visual data obtained through filtering and the retrieval text.

21. An electronic device, wherein the electronic device comprises a memory and a processor, the memory is configured to store a computer program, and the processor is configured to execute the computer program, to implement steps of the cross-modal retrieval method according to any one of claims 1 to 10.

22. A computer-readable storage medium, wherein the storage medium stores instructions, and when the instructions are run on the computer, the computer is enabled to perform steps of the method according to any one of claims 1 to 10.

23. A computer program, wherein the computer program comprises instructions, and when the instructions are run on a computer, the computer is enabled to perform steps of the cross-modal retrieval method according to any one of claims 1 to 10.

24. A chip, wherein the chip comprises a processor and an interface circuit, the interface circuit is configured to receive instructions and transmit the instructions to the processor, and the processor is configured to perform steps of the cross-modal retrieval method according to any one of claims 1 to 10.

25. A retrieval system, wherein the retrieval system comprises the cross-modal retrieval apparatus according to any one of claims 11 to 20 and a model training apparatus.
